# EUROPÄISCHE PATENTANMELDUNG

(11) **EP 2 163 917 A1**
(43) Veröffentlichungstag der Anmeldung: **17.03.2010**
(21) Anmeldenummer: 08014927.1
(22) Anmeldetag: 22.08.2008
(51) Int. Cl.: G01S 17/02, G01S 17/46

(54) **Verfahren und Lichttaster zum Nachweis von Objekten**

(71) Anmelder: Pepperl + Fuchs GmbH, 68307 Mannheim (DE)
(72) Erfinder: Levy, Carsten, 12305 Berlin (DE)
(74) Vertreter: Schiffer, Axel Martin

(57) **Zusammenfassung**

Die vorliegende Erfindung betrifft ein Verfahren zum Nachweis von, insbesondere zu bedruckenden und/oder bereits bedruckten, Objekten in einer mit Verschmutzungsteilchen durchsetzten Einsatzumgebung. Bei dem erfindungsgemäßen Verfahren wird ein erster Lichtfleck auf eine erste Stelle eines nachzuweisenden Objekts gestrahlt, mindestens ein weiterer Lichtfleck wird auf eine von der ersten Stelle verschiedene weitere Stelle des nachzuweisenden Objekts gestrahlt, das von dem ersten Lichtfleck zurückgestrahlte Licht und das von dem weiteren Lichtfleck zurückgestrahlte Licht wird gemessen. Die Größen des ersten Lichtflecks und des weiteren Lichtflecks auf dem nachzuweisenden Objekt werden dabei so gewählt, dass von Verschmutzungsteilchen, die in der Einsatzumgebung typischerweise auftreten und die von einem der Lichtflecke beleuchtet werden, ein nachweisbarer Anteil des angestrahlten Lichts zurückgestrahlt wird. Weiterhin werden die zu dem ersten Lichtfleck und dem weiteren Lichtfleck gehörenden Messsignale ausgewertet und abhängig davon wird ein Schaltsignal ausgegeben, wobei ein Signal "Objekt festgestellt" nur dann ausgegeben wird, wenn eine Intensität des von dem ersten Lichtfleck und von dem weiteren Lichtfleck zurückgestrahlten Licht jeweils einen festzulegenden Schwellwert überschreitet. Die Erfindung betrifft außerdem einen Lichttaster zur Durchführung des erfindungsgemäßen Verfahrens.

## Beschreibung

Die vorliegende Erfindung bezieht sich in einem ersten Aspekt auf ein Verfahren zum Nachweis von, insbesondere zu bedruckenden und/oder bereits bedruckten, Objekten in einer mit Verschmutzungsteilchen durchsetzten Einsatzumgebung.

In einem zweiten Gesichtspunkt betrifft die Erfindung einen Lichttaster zum Nachweis von, insbesondere zu bedruckenden und/oder bereits bedruckten, Objekten in einer mit Verschmutzungsteilchen durchsetzten Einsatzumgebung zur Durchführung des erfindungsgemäßen Verfahrens nach dem Oberbegriff des Anspruchs 7.

Bei bekannten Lichttastern, welche zum Nachweis von Objekten in der industriellen Automatisierungstechnik für eine Vielzahl von Aufgabenstellungen verwendet werden, wird mit einer Lichtquelle auf ein nachzuweisendes Objekt ein Lichtfleck gestrahlt. Sodann wird mit einem Detektor das von diesem Lichtfleck zurückgestrahlte Licht nachgewiesen und mit einem, gegebenenfalls eingelernten Schwell- oder Vergleichswert verglichen. Wenn die nachgewiesene Lichtintensität einen gewissen Schwellwert überschreitet, wird ein entsprechendes Signal, das zu einem Schaltsignal weiterverarbeitet werden kann, ausgegeben. Ein gattungsgemäßer Lichttaster weist deshalb mindestens eine erste Lichtquelle zum Strahlen eines ersten Lichtflecks auf eine erste Stelle eines nachzuweisenden Objekts, eine Detektoreinrichtung zum Nachweisen von von dem ersten Lichtfleck zurückgestrahlten Licht und eine Steuer- und Auswerteeinrichtung zum Ansteuern der ersten Lichtquelle, zum Auswerten der von der Detektoreinrichtung gemessenen Lichtintensitäten und zum Ausgeben von Schaltsignalen auf.

Solche Geräte werden auch als Reflexionslichttaster bezeichnet, bei denen die von einem Sender abgestrahlte und von einem nachzuweisenden Objekt zurückgestrahlte Lichtleistung von einem Empfänger ausgewertet wird. Das von einem Sender abgestrahlte Licht wird mit einer geeigneten Optik geformt und abgestrahlt. Wenn der ausgesandte Lichtstrahl innerhalb seines Erfassungsbereichs nicht auf ein nachzuweisendes Objekt trifft, wird keine auswertbare Lichtleistung auf das Empfängerelement zurückgestrahlt. Der Sensor schaltet deshalb nicht.

Wenn sich andererseits innerhalb des Erfassungsbereichs ein Objekt befindet, trifft das vom Sender abgestrahlte Licht auf dieses Objekt und, je nach Remissionsgrad, also Reflexionsvermögen, dieses Objekts, wird eine auswertbare Lichtleistung auf das Empfängerelement zurückgestrahlt.

Insbesondere wird bei solchen Reflexionslichttastern das Triangulationsprinzip verwendet, bei denen das Empfängerelement im Allgemeinen neben dem Lichtsender angeordnet und in ein Nahelement und ein Fernelement unterteilt ist. Abhängig vom Abstand des nachzuweisenden Objekts fällt aufgrund elementarer geometrischer Eigenschaften das zurückgestrahlte Licht auf das Nah- oder das Fernelement, wobei durch geeignete geometrische Anordnung eine sogenannte Tastweite des Lichttasters eingestellt werden kann.

Bei solchen Reflexionstastern spricht man auch vom Prinzip der Hintergrundausblendung, da, wenn nur auf das Nahelement eintreffende Strahlung ausgewertet wird, die vom Hintergrund, also von weiter entfernt liegenden Bereichen kommende Strahlung ausgeblendet wird.

Es besteht also eine vom Abstand des Objekts abhängige Lage des Lichtssignals auf dem Empfänger. Wenn sich das nachzuweisende Objekt im sogenannten Nahbereich des Lichttasters befindet oder in den Lichtstrahl eintritt, wird eine von dem Objekt zurückgestrahlte Lichtleistung auf das Nahelement des Empfängers abgebildet. Überschreitet die auftreffende Lichtleistung einen bestimmten festzulegenden und einzustellenden Schwellwert, schaltet der Sensor.

Wenn andererseits das Objekt im sogenannten Fernbereich des Lichttasters liegt, wird die zurückgestrahlte Lichtleistung auf das Fernelement abgebildet. Wenn hierbei die auftreffende Lichtleistung einen bestimmten Schwellwert überschreitet, schaltet der Sensor, wenn er vorher eingeschaltet war, aus, oder er schaltet erst gar nicht ein.

Je nach Form und Reflexionsvermögen des Objekts wird dieses also, sobald es im Erfassungsbereich des Nachbereichs liegt, vom Sensor erkannt.

Aufgrund der technischen Entwicklung im Bereich der Lichtquellen, insbesondere von Leuchtdioden, sind immer höhere Senderleistungen möglich und es können auch immer schwächer zurückstrahlende Objekte erkannt werden, so dass in diesem Sinn die Erkennungsschwelle von Objekten ständig verbessert wird. Weiterhin stehen heute auch deutlich verbesserte optische Elemente, insbesondere Kunststofflinsen, zur Verfügung, so dass die entsprechenden Abbildungsgrößen kleiner und schärfer werden. Diese scharfen Abbildungen sind nötig, um die Nachweiseigenschaften, die bei strukturierten Objekten auftreten, zu verbessern. Sämtliche der genannten Maßnahmen erhöhen die Lichtleistung pro Fläche des Senderstrahls, also die Intensität des Lichtstrahls. Hierdurch werden die Lichttaster immer empfindlicher, das heißt, die Größe der erkennbaren Objekte, welche die Detektionsschwelle überschreiten können, wird stets kleiner.

Dies führt dazu, dass die Erkennungsschwelle soweit sinken kann, dass auch sehr kleine und kleinste Teile von einer Querschnittsfläche von beispielsweise 0,05 mm² erkannt werden können. Hierdurch können Fehlschaltungen auftreten, wenn in der entsprechenden Einsatzumgebung Teilchen dieser Größe auftreten. Für den laufenden Maschinenbetrieb ist dies äußerst ungünstig und muss auf jeden Fall vermieden werden. Insbesondere kann dies bei Druckmaschinen oder sonstigen papierverarbeitenden Maschinen, wie Falzmaschinen, auftreten, bei denen in zunehmendem Maß qualitativ schlechteres Papier verarbeitet wird, was sich beispielsweise durch zunehmende Verschmutzungen durch Papierfasern bemerkbar macht.

Bei bekannten Lösungen wurden bisher mehrerer Sensoren nebeneinander montiert und mit einer entsprechenden Logikverknüpfung ausgewertet. Der apparative Aufwand ist hierbei jedoch beträchtlich. Außerdem wird vergleichsweise viel Platz benötigt durch die große räumliche Trennung der einzelnen Abtastorte. Schließlich ist diese Lösung vergleichsweise teuer.

Eine geringere Empfindlichkeit auf Verunreinigungen kann außerdem erreicht werden, indem der Lichtfleck als solcher vergrößert wird. Dadurch wird aber gleichzeitig die optische Leistungsfähigkeit verschlechtert, die Lage des Schaltpunkts wird verändert und auch die sogenannte Schaltkeule, das heißt der räumliche Bereich, in welchem der Sensor empfindlich ist, wird verändert.

Als eine **Aufgabe** der Erfindung kann angesehen werden, ein Verfahren zum Nachweis von, insbesondere zu bedruckenden und/oder bereits bedruckten, Objekten anzugeben, bei welchem auch bei sehr kleinen Lichtflecken zuverlässig zwischen tatsächlich nachzuweisenden Objekten und Verschmutzungsteilchen unterschieden werden kann. Außerdem soll ein Lichttaster zur Durchführung des Verfahrens angegeben werden.

Diese Aufgabe wird durch das Verfahren mit den Merkmalen des Anspruchs 1 und durch den Lichttaster mit den Merkmalen des Anspruchs 7 gelöst.

Vorteilhafte Varianten des erfindungsgemäßen Verfahrens und bevorzugte Ausgestaltungen der erfindungsgemäßen Vorrichtung sind Gegenstand der abhängigen Ansprüche und werden außerdem in der folgenden Beschreibung, insbesondere im Zusammenhang mit den Figuren beschrieben.

Bei dem erfindungsgemäßen Verfahren zum Nachweis von, insbesondere zu bedruckenden und/oder bereits bedruckten, Objekten in einer mit Verschmutzungsteilchen durchsetzten Umgebung wird ein erster Lichtfleck auf eine erste Stelle eines nachzuweisenden Objekts gestrahlt, mindestens ein weiterer Lichtfleck wird auf eine von der ersten Stelle verschiedene weitere Stelle des nachzuweisenden Objekt gestrahlt, das von dem ersten Lichtfleck zurückgestrahlte Licht und das von dem weiteren Lichtfleck zurückgestrahlte Licht wird gemessen. Die Größen des ersten Lichtflecks und des weiteren Lichtflecks auf dem nachzuweisenden Objekt werden dabei so gewählt, dass von Verschmutzungsteilchen, die in der Einsatzumgebung typischerweise auftreten und die von einem der Lichtflecke beleuchtet werden, ein nachweisbarer Anteil des eingestrahlten Lichts zurückgestrahlt wird. Weiterhin werden die zu dem ersten Lichtfleck und dem weiteren Lichtfleck gehörenden Messsignale ausgewertet und abhängig davon wird ein Schaltsignal ausgegeben, wobei ein Signal "Objekt festgestellt" nur dann ausgegeben wird, wenn eine Intensität des von dem ersten Lichtfleck und von dem weiteren Lichtfleck zurückgestrahlten Lichts jeweils einen festzulegenden Schwellwert überschreitet.

Der Lichttaster der oben genannten Art ist erfindungsgemäß dadurch weitergebildet, dass mindestens eine weitere Lichtquelle vorhanden ist zum Strahlen mindestens eines weiteren Lichtflecks auf eine von der ersten Stelle verschiedene weitere Stelle des nachzuweisenden Objekts, dass die Größen des ersten und des weiteren Lichtflecks auf dem nachzuweisenden Objekt so gewählt sind, dass von Verschmutzungsteilchen, die in der Einsatzumgebung typischerweise auftreten und die von einem der Lichtflecke beleuchtet werden, ein nachweisbarer Anteil des Lichts zurückgestrahlt wird, dass die Detektoreinrichtung eingerichtet ist zum Nachweisen von von dem weiteren Lichtfleck zurückgestrahltem Licht oder dass eine weitere Detektoreinrichtung vorhanden ist zum Nachweisen von von dem weiteren Lichtfleck zurückgestrahltem Licht, dass die Steuer-und Auswerteeinrichtung eingerichtet ist zum Ansteuern der weiteren Lichtquelle und zum Ausgeben eines Schaltsignals "Objekt erkannt" nur dann, wenn sowohl eine zu dem ersten Lichtfleck gehörende Intensität als auch eine zu dem weiteren Lichtfleck gehörende Intensität über einem jeweils festzulegenden Grenzwert liegt.

Als erster Kerngedanke der Erfindung kann angesehen werden, zusätzlich zu einem ersten Lichtfleck zum Überprüfen der Anwesenheit eines Objekts einen weiteren Lichtfleck auf das Objekt zu strahlen. Nur wenn von beiden Lichtflecken hinreichend viel Lichtintensität zurückgestrahlt oder zurückgestreut wird, kann dann mit Sicherheit davon ausgegangen werden, dass sich tatsächlich das richtige nachzuweisende Objekt im Überwachungsbereich befindet.

Als wesentliche Idee der Erfindung kann angesehen werden, mit Hilfe von mindestens einem weiteren Sendeelement einen weiteren optischen Kanal zu realisieren, also einen weiteren zusätzlichen Lichtfleck auf das nachzuweisende Objekt zu leuchten, der räumlich etwas versetzt zu dem eigentlichen Hauptlichtfleck positioniert oder angeordnet ist. Das zusätzliche Sendeelement kann wahlweise ausgeführt sein als separates Senderelement oder es kann auch ein einzelnes Sendeelement verwendet werden, welches zwei getrennt ansteuerbare Elemente beinhaltet. Nach Erkennen eines Tastguts, also wenn die entsprechend festgelegten Schwellwerte überschritten werden, wird, um ein tatsächlich nachzuweisendes Objekt von einem Verschmutzungsteilchen zu unterscheiden, eine Plausibilitätsuntersuchung durchgeführt, welche Auskunft darüber gibt, ob es sich um ein Verschmutzungsteilchen oder ein tatsächlich nachzuweisendes Objekt, wie beispielsweise einen Papierbogen handelt.

Wenn sich dagegen im Bereich eines der beiden Lichtflecken ein Verschmutzungsteilchen befindet, dessen Rückstreuung für sich genommen ausreichen würde, den entsprechenden Schwellwert zu überschreiten, würde die Auswertelogik verhindern, dass ein Schaltsignal "Objekt erkannt" abgegeben wird.

Als besonderer Vorteil der Erfindung kann angesehen werden, dass eine sichere Detektion von Papierkanten, bedruckten Stoffen und/oder sonstigen Abtastobjekten auch in Einsatzumgebungen möglich ist, welche stark mit Verschmutzungsteilchen durchsetzt sind.

Hierzu kann eine minimale Objektgröße definiert werden, die zum Einschalten nötig ist.

Mit der vorliegenden Erfindung kann sichergestellt werden, dass Verschmutzungsteilchen mit einer definierten und einzustellenden Größe nicht mehr von dem Sensor erkannt werden und deshalb der laufende Betrieb einer Maschine durch solche Teilchen nicht mehr gestört werden kann. Dabei funktioniert die Erkennung des eigentlichen Tastguts, also der nachzuweisenden Objekte, weiterhin mit derselben hohen Genauigkeit.

Weitere Vorteile lassen sich durch geschickte Auswertung der von den unterschiedlichen Sendern generierten Signale im Hinblick auf das Einspielverhalten und/oder Pepita-Effekte erreichen.

Als Lichtfleck wird grundsätzlich eine abgeschlossene beleuchtete Fläche auf dem nachzuweisenden Objekt verstanden. Insbesondere kann es sich hier bei geeigneter Anordnung des Sensors relativ zu dem nachzuweisenden Objekt um eine Abbildung der Lichtquelle, beispielsweise also um eine Abbildung der leuchtenden Fläche einer Leuchtdiode handeln.

Bei dem Verschmutzungsteilchen kann es sich im Prinzip um jede Art von Teilchen handeln. Da das erfindungsgemäße Verfahren und der erfindungsgemäße Lichttaster besonders vorteilhaft bei papierverarbeitenden Maschinen, beispielsweise also Druck-, Falz- und/oder Bindemaschinen, eingesetzt werden kann, sind typische Verschmutzungsteilchen hier Papierfasern oder kleine Papierstückchen. In diesem Zusammenhang muss unbedingt verhindert werden, dass aufgrund solcher Verschmutzungsteilchen bestimmte Maschinenprozesse gestartet werden, weil fälschlicherweise angenommen wird, dass ein Papierbogen vorhanden ist.

Grundsätzlich können die mindestens zwei verschiedenen Lichtflecke gleichzeitig auf das Objekt gestrahlt oder geleuchtet werden. Hierbei ist dann dafür Sorge zu tragen, dass das von diesen beiden Lichtflecken zurückgestrahlte Licht auswertungsseitig getrennt werden kann, was beispielsweise mit Hilfe von geeignet positionierten und ausgerichteten Optiken möglich ist. Bei einer vergleichsweise einfachen Lösung wird der erste Lichtfleck und der weitere Lichtfleck und/oder werden die weiteren Lichtflecken zeitlich nacheinander, also beispielsweise abwechselnd, beleuchtet.

Ein weiterer Plausibilitätstest kann auch dadurch durchgeführt werden, dass mindestens einer der Lichtflecke für einen Auswertungszyklus mehrmals beleuchtet wird.

Im Hinblick auf typischerweise auftretende Verschmutzungsteilchen wird die Größe der Lichtflecken auf dem Objekt kleiner als 2,5mm*2,5mm, bevorzugt kleiner als 2,0mm*2,0mm und besonders bevorzugt kleiner als 1,5mm*1,5mm, gewählt.

Prinzipiell kann zum Beleuchten des Objekts jede Art von Licht, beispielsweise sichtbares Licht, verwendet werden. Wenn die zu überprüfenden Objekte farbig sind oder eventuell stark spiegeln, beispielsweise bei Hochglanzdrucken, kann es auch vorteilhaft sein zum Beleuchten des Objekts Infrarotlicht zu verwenden.

Auch im Hinblick auf die Lichtquellen besteht grundsätzlich Wahlfreiheit, wobei vorteilhafterweise Leuchtdioden verwendet werden, die bevorzugt in Chip-on-Board-Technologie auf einer Leiterplatte angeordnet sind.

Bei einer besonders bevorzugten und kompakten Variante des erfindungsgemäßen Lichttasters wird genau eine weitere Lichtquelle verwendet.

Bei einer weiteren vorteilhaften Ausgestaltung der Erfindung wird eine Hintergrundausblendung nach dem Triangulationsprinzip durchgeführt, so dass außerdem festgestellt werden kann, ob sich das nachzuweisende Objekt in der richtigen Entfernung oder jedenfalls in einem richtigen Entfernungsbereich vor dem Sensor, also dem Lichttaster, befindet. Die Detektoreinrichtung weist dann für Triangulationsmessungen ein Nahelement und ein Fernelement auf.

Besonders bevorzugt wird das von dem ersten Lichtfleck und dem weiteren Lichtfleck zurückgestrahlte Licht mit ein und derselben Detektoreinrichtung nachgewiesen. Der vorrichtungsmäßige Aufwand für den Lichttaster kann so begrenzt werden.

Als Detektoreinrichtung werden bevorzugt Photodioden verwendet, die besonders vorteilhaft auf derselben Leiterplatte wie die Leuchtdioden ebenfalls in Chip-on-Board-Technologie angeordnet oder aufgebracht sind.

Besonders zweckmäßig wird schließlich die erste Leuchtdiode, welche auch als Hauptlichtquelle oder als Hauptleuchtdiode bezeichnet werden kann, symmetrisch zu einer Achse des Detektors oder der Detektoreinrichtung angebracht. Dies hat den Vorteil, dass prinzipiell auf bekannte Layouts zurückgegriffen werden kann und die zusätzliche Lichtquelle in ein solches bekanntes Layout einfach eingesetzt werden kann. Auch vorhandene Ersatzteilbestände können auf diese genutzt werden.

Weitere Vorteile und Merkmale der Erfindung werden nachstehend mit Bezug auf die beigefügten schematischen Figuren beschrieben. Hierin zeigen:
- Figur 1:: eine schematische Skizze eines erfindungsgemäßen Lichttasters, anhand derer außerdem das Prinzip von Triangulationsmessungen erläutert wird;
- Figur 2:: eine typische Anordnung der Lichtquellen und der Detektoreinrichtung auf einer Leiterplatte;
- Figur 3:: eine schematische Ansicht der Position des ersten Lichtflecks und des weiteren Lichtflecks auf einem nachzuweisenden Objekt;
- Figur 4:: eine schematisch dargestellte Situation, in welcher ein Verschmutzungsteilchen nachgewiesen wird und
- Figur 5:: eine Wahrheitstabelle, nach welcher ein Ausgabesignal "Objekt erkannt" aus- gegeben wird.

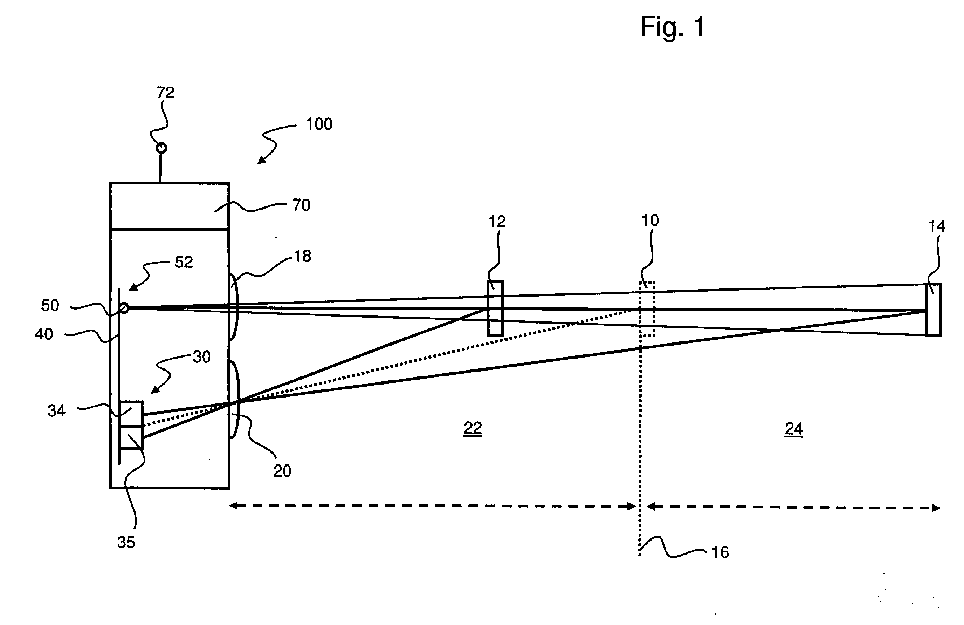

Ein Ausführungsbeispiel der Erfindung wird mit Bezug auf die Figuren 1 bis 5 erläutert. Äquivalente Komponenten sind in allen Figuren mit denselben Bezugszeichen gekennzeichnet.

Zunächst wird mit Bezug auf Figur 1 der grundlegende Aufbau zusammen mit dem Triangulationsprinzip erläutert. Gezeigt ist dort ein erfindungsgemäßer Lichttaster 100, welcher als wesentliche Komponenten eine erste Lichtquelle 50, eine weitere Lichtquelle 52, eine Detektoreinrichtung 30 und eine Steuer- und Auswerteeinrichtung 70 aufweist. Die Steuer- und Auswerteeinrichtung 70 weist einen Ausgang 72 auf, an welchem Schaltsignale, beispielsweise ein Schaltsignal "Objekt erkannt" ausgegeben werden kann.

Bei dem gezeigten Lichttaster 100 handelt es sich um einen Triangulationssensor, das heißt der Einfallswinkel der von einem nachzuweisenden Objekt zurückgestrahlten Strahlung auf die Detektoreinrichtung 30 hängt ab von der Entfernung dieses Objekts von dem Lichttaster 100. Dies ist in Figur 1 veranschaulicht. Ein Objekt 12 beispielsweise befindet sich in einem sogenannten Nahbereich 22 vor dem Lichttaster 100, also in einem Abstand der kleiner ist als die sogenannte Tastweite, welche durch eine vertikale gepunktete Linie 16 angedeutet ist. Von diesem Objekt 12 zurückgestrahltes Licht wird über eine Detektionsoptik 20 auf ein Nahelement 35 der Detektoreinrichtung 30 geleitet.

Im Unterschied dazu wird Strahlung von einem vergleichsweise weit entfernt liegenden Objekt 14 in einem sogenannten Fernbereich 24 von derselben Detektionsoptik 20 auf ein sogenanntes Fernelement 34 der Detektionseinrichtung 30 geleitet und dort nachgewiesen. Je nach Auftreffort der Strahlung auf der Detektionseinrichtung 30 kann demgemäß eine Aussage darüber getroffen werden, ob sich das nachzuweisende Objekt im Fernbereich 24 oder im Nahbereich 22 befindet. Beispielhaft ist in Figur 1 außerdem ein nachzuweisendes Objekt 10 bei der Tastweite 16 eingezeichnet.

Im gezeigten Ausführungsbeispiel sind die erste Lichtquelle 50, die weitere Lichtquelle 52 und die Detektoreinrichtung 30 auf einer gemeinsamen Leiterplatte 40 angeordnet. Das Licht der ersten Lichtquelle 50 und der weiteren Lichtquelle 52 wird mit einer gemeinsamen Sendeoptik 18 in den Überwachungsbereich gestrahlt.

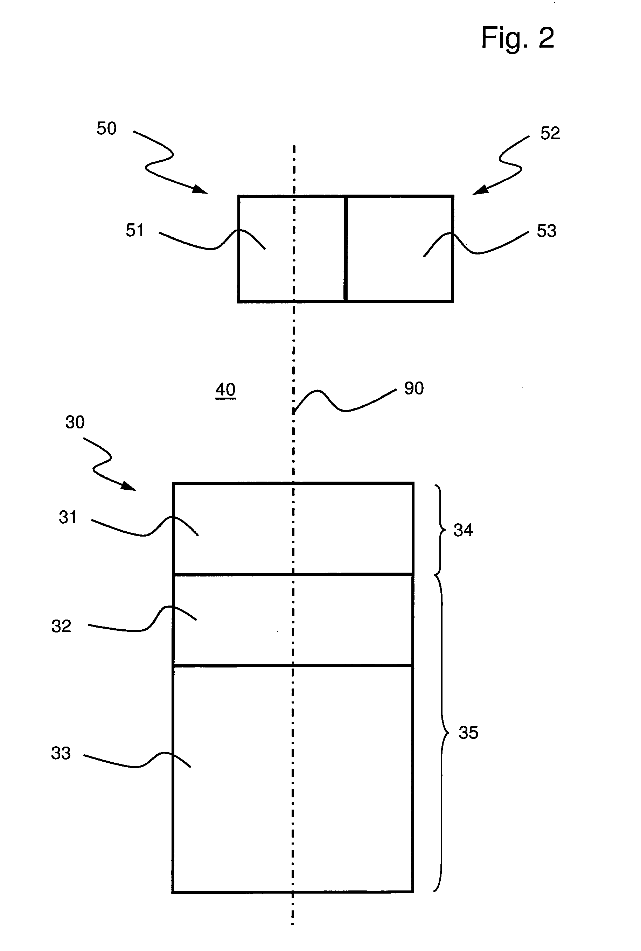

Die Anordnung der Lichtquellen 50, 52 und der Detektoreinrichtung 30 auf der Leiterplatte 40 ist schematisch in Figur 2 dargestellt. Die Detektoreinrichtung 30 ist aus einem ersten Detektorelement 31, einem zweiten Detektorelement 32 und einem dritten Detektorelement 33 aufgebaut, wobei im gezeigten Beispiel das zweite Detektorelement 32 und das dritte Detektorelement 33 zu dem Nahelement 35 zusammengeschaltet sind und wobei das erste Detektorelement 31 das Nahelement 34 ist. Bei den Detektorelementen 31, 32, 33 handelt es sich jeweils um Photodioden. Auch andere Zusammenschaltungen der Detektorelemente 31 bis 33 sind, beispielsweise zum Verändern der Tastweite des Sensors, möglich.

Die erste Lichtquelle 50 ist durch eine Leuchtdiode 51 gebildet, welche in Chip-on-Board-Technologie auf der Leiterplatte 40 angeordnet ist. Ebenso ist die weitere Lichtquelle 52 durch eine Leuchtdiode 53 gebildet, die ebenso direkt auf die Leiterplatte 40 gebondet ist.

Bedeutsam ist in Figur 2, dass die erste Lichtquelle 50 symmetrisch zu einer Symmetrieachse 90 der Detektoreinrichtung 30 positioniert ist. Auf diese Weise wird das von dem ersten Lichtfleck 60, welcher auf die erste Lichtquelle 50 zurückgeht, zurückgestrahltes Licht von der Detektoreinrichtung 30 besonders effektiv nachgewiesen. Diese Anordnung hat außerdem den Vorteil, dass die erfindungsgemäße Funktionalität prinzipiell zugeschaltet werden kann. Prinzipiell muss nur statt eines einzigen Chips für die erste Leuchtdiode 51 ein Doppelchip mit der ersten Leuchtdiode 51 und der weiteren Leuchtdiode 53, welcher zuvor in geeigneter Weise geteilt, beispielsweise zersägt wurde, oder einfach ein weiterer LED-Chip auf die Leiterplatte 40 montiert werden. Besonders vorteilhaft ist außerdem, dass dann auf vorhandene Leiterplattenlayouts zurückgegriffen werden kann oder diese nur sehr geringfügig geändert werden müssen.

Zweckmäßig kann auch sein, symmetrisch zur Symmetrieachse 90 der Detektoreinrichtung 30 drei Senderelemente anzuordnen. Je nach Einsatzzweck kann dann das mittige Senderelement und das links oder rechts davon positionierte Senderelement verwendet und betrieben werden.

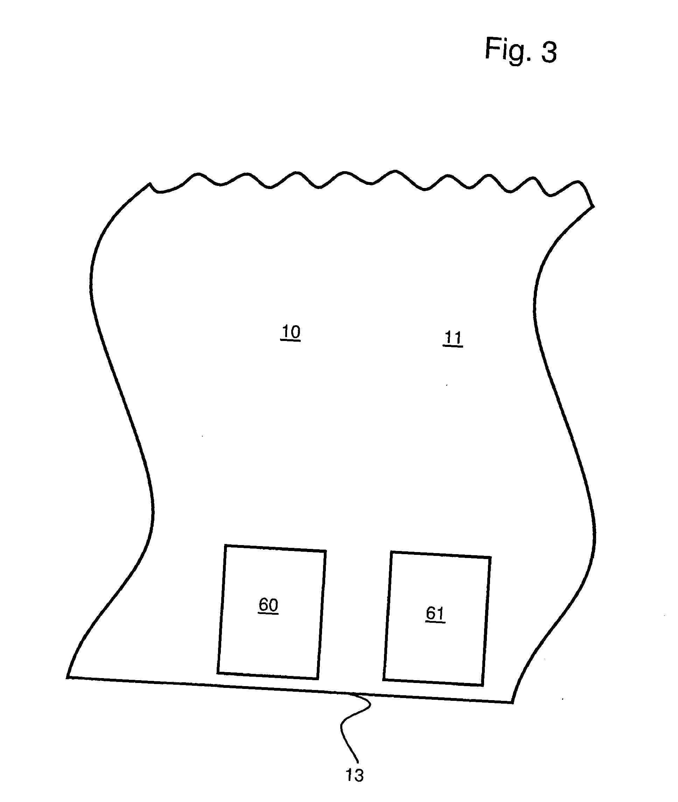

Die Funktionsweise des erfindungsgemäßen Verfahrens wird näher mit Bezug auf die Figuren 3 bis 5 erläutert.

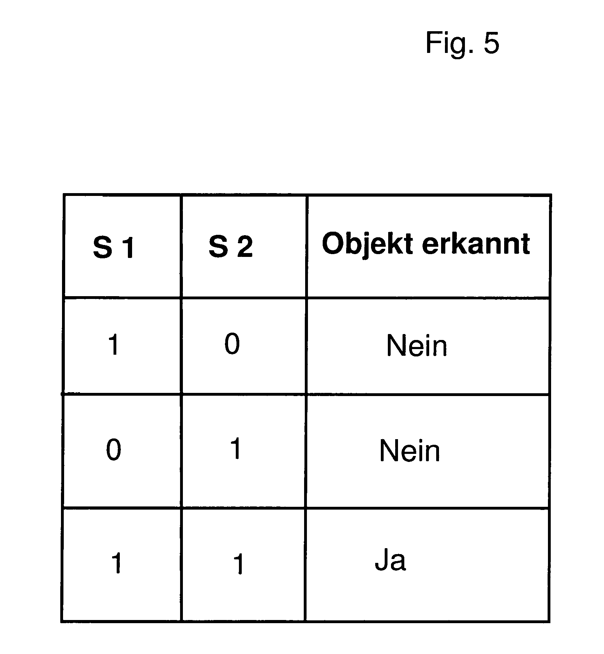

Figur 3 zeigt schematisch ein nachzuweisendes Objekt 10, wobei es sich im gezeigten Beispiel um einen nachzuweisenden Papierbogen 11 handeln soll. Dieser Papierbogen 11 gelangt in der Ansicht von Figur 3 von oben in den Erfassungsbereich des Lichttasters 100. Sobald eine Kante 13 sich weit genug nach unten bewegt hat, fällt sowohl ein erster Lichtfleck 60 als auch ein weiterer Lichtfleck 61 vollständig auf den Papierbogen 11. Das von diesen Lichtflecken zurückgestrahlte Licht wird mit Hilfe der vorbeschriebenen Detektoreinrichtung 30 nachgewiesen und sodann in der Steuer- und Auswerteeinrichtung 70 quantitativ ausgewertet. Hierzu werden sowohl für den ersten Lichtfleck 60 als auch für den weiteren Lichtfleck 61 jeweils separate Schwellwerte festgelegt. Ein Schaltsignal "Objekt erkannt" wird am Ausgang 72 der Steuer- und Auswerteeinrichtung 70 nur dann ausgegeben, wenn sowohl die Intensität des vom Lichtfleck 60 zurückgestrahlten Lichts über dem hierfür festgelegten Schwellwert liegt, als auch wenn von dem weiteren Lichtfleck 61 das zurückgestrahlte Licht über dem hierfür festgelegten Schwellwert liegt. Dies ist in der Wahrheitstabelle in Figur 5 zusammengefasst, wobei S1 die für den ersten Lichtfleck 60 festgelegte Schwelle bedeutet und S2 die für den weiteren Lichtfleck 61 festgelegte Schwelle repräsentiert. Die Ziffer 1 bedeutet sodann, dass dieser Schwellwert überschritten wird und die Ziffer 0 gibt an, dass der jeweilige Schwellwert nicht erreicht wird.

Besonders bevorzugt werden der erste Lichtfleck 60 und der weitere Lichtfleck 61 nacheinander beleuchtet, sodass für den Nachweis dieselbe Detektoreinrichtung 30 verwendet werden kann und sich die Auswertung insgesamt einfacher gestaltet.

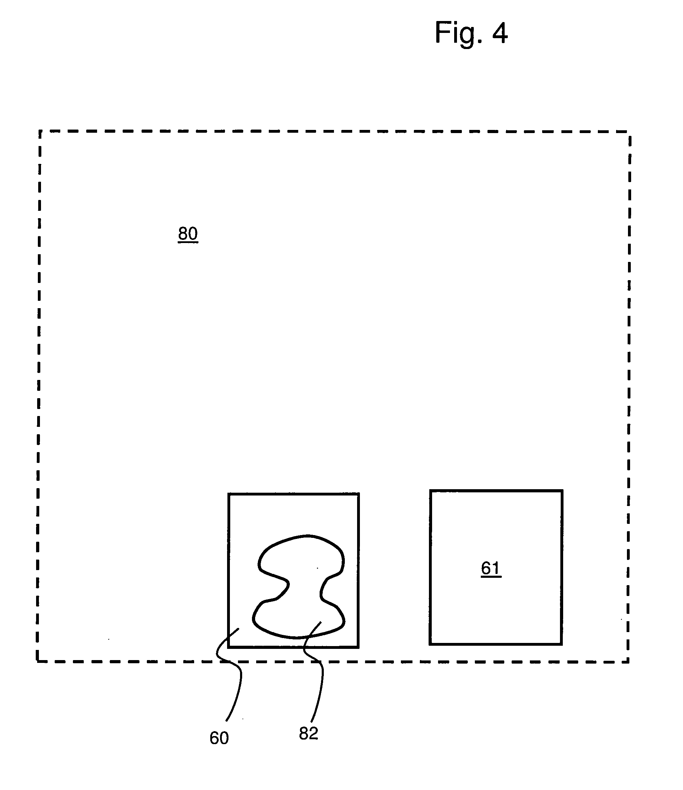

Die Unterscheidung eines tatsächlich nachzuweisenden Objekts 10 von einem Verschmutzungsteilchen wird im Zusammenhang mit Figur 4 näher erläutert. Als gestrichelt dargestelltes Quadrat ist dort ein Überwachungsbereich 80 des erfindungsgemäßen Lichttasters 100 angedeutet. Entsprechend der in Figur 3 dargestellten Situation finden sich auch hier ein erster Lichtfleck 60 und ein weiterer Lichtfleck 61, wobei sich jedoch kein nachzuweisendes Objekt 10 im Überwachungsbereich 80 befindet. Stattdessen beleuchtet der erste Lichtfleck 60 ein Verschmutzungsteilchen 82, wobei es sich beispielsweise um eine Papierfaser, ein kleines Papierstückchen oder auch um ein Staubteilchen handeln kann. Von diesem Verschmutzungsteilchen 82 wird soviel Licht zurückgestrahlt, dass die Schwelle S1 überschritten wird und insoweit ein Objekt vorhanden sein könnte. Da aber nicht gleichzeitig auch von dem weiteren Lichtfleck 61 hinreichend Licht zurückgestrahlt wird, schaltet die Logik der Steuer- und Auswerteeinrichtung 70 gemäß der Wahrheitstabelle in Figur 5 nicht auf "Objekt erkannt". Insgesamt kann auf diese Weise zuverlässig zwischen Verschmutzungsteilchen 82 und tatsächlich nachzuweisenden Objekten 10 unterschieden werden.

Mit der vorliegenden Erfindung wird ein neuartiges Verfahren und ein neuartiger Lichttaster zum sicheren Erkennen von Tastgut, insbesondere von Papierkanten, auch unter Umgebungsbedingungen mit einer hohen Dichte an Verschmutzungs- oder Fremdpartikeln bereitgestellt. Dies bedeutet, dass auch eine hohe Zahl von kleinen Fremd- oder Verschmutzungsteilchen, wie beispielsweise Papierfasern oder Staubteilchen, innerhalb des optisch wirksamen Tastbereichs anwesend sein können. Auf diese Weise kann eine vergleichsweise hohe Unempfindlichkeit auf Papierschnipsel, wie sie im Druck-, Falz-, Verpackungs- und/oder sonstigen Maschinen auftreten, bei gleichbleibender optischer Leistungsfähigkeit erzielt werden.

Insgesamt kann mit Hilfe der vorliegenden Erfindung bei gleicher optischer Leistungsfähigkeit die Betriebssicherheit des Lichttasters erheblich gesteigert werden.

## Patentansprüche

1. Verfahren zum Nachweis von, insbesondere zu bedruckenden und/oder bereits bedruckten, Objekten in einer mit Verschmutzungsteilchen durchsetzten Einsatzumgebung,
bei dem ein erster Lichtfleck (60) auf eine erste Stelle eines nachzuweisenden Objekts (10) gestrahlt wird,
bei dem mindestens ein weiterer Lichtfleck (61) auf eine von der ersten Stelle verschiedene weitere Stelle des nachzuweisenden Objekt (10) gestrahlt wird, bei dem das von dem ersten Lichtfleck (60) zurückgestrahlte Licht gemessen wird,
bei dem das von dem weiteren Lichtfleck (61) zurückgestrahlte Licht gemessen wird,
wobei die Größen des ersten Lichtflecks (60) und des weiteren Lichtflecks (61) auf dem nachzuweisenden Objekt (10) so gewählt werden, dass von Verschmutzungsteilchen (82), die in der Einsatzumgebung typischerweise auftreten und die von einem der Lichtflecke (60, 61) beleuchtet werden, ein nachweisbarer Anteil des eingestrahlten Lichts zurückgestrahlt wird,
bei dem die zu dem ersten Lichtfleck (60) und dem weiteren Lichtfleck (61) gehörenden Messsignale ausgewertet werden und abhängig davon ein Schaltsignal ausgegeben wird und
bei dem ein Signal "Objekt festgestellt" nur dann ausgegeben wird, wenn eine Intensität des von dem ersten Lichtfleck (60) und von dem weiteren Lichtfleck (61) zurückgestrahlten Lichts jeweils einen festzulegenden Schwellwert überschreitet.

2. Verfahren nach Anspruch 1,
**dadurch gekennzeichnet,**
**dass** der erste Lichtfleck (60) und der weitere Lichtfleck (61) und/oder die weiteren Lichtflecken zeitlich nacheinander beleuchtet werden.

3. Verfahren nach Anspruch 1 oder 2,
**dadurch gekennzeichnet,**
**dass** mindestens einer der Lichtflecke (60, 61) für einen Auswertungszyklus mehrmals beleuchtet wird.

4. Verfahren nach einem der Ansprüche 1 bis 3,
**dadurch gekennzeichnet,**
**dass** die Größe der Lichtflecken (60, 61) auf dem Objekt (10) kleiner als 2,5mm*2,5mm, bevorzugt kleiner als 2,0mm*2,0m und besonders bevorzugt kleiner als 1,5mm*1,5mm, gewählt wird.

5. Verfahren nach Anspruch 1 bis 4,
**dadurch gekennzeichnet,**
**dass** Infrarotlicht zum Beleuchten des Objekts (10) verwendet wird.

6. Verfahren nach Anspruch 1 bis 5,
**dadurch gekennzeichnet,**
**dass** eine Hintergrundausblendung nach dem Triangulationsprinzip durchgeführt wird.

7. Lichttaster zum Nachweis von, insbesondere zu bedruckenden und/oder bereits bedruckten, Objekten in einer mit Verschmutzungsteilchen durchsetzten Einsatzumgebung zur Durchführung des Verfahrens nach einem Ansprüche 1 bis 6,
mit einer ersten Lichtquelle (50) zum Strahlen des ersten Lichtflecks (60) auf eine erste Stelle eines nachzuweisenden Objekts (10),
mit einer Detektoreinrichtung (30) zum Nachweisen von von dem ersten Lichtfleck (60) zurückgestrahltem Licht,
mit einer Steuer- und Auswerteeinrichtung (70) zum Ansteuern der ersten Lichtquelle (50), zum Auswerten der von der Detektoreinrichtung (30) gemessenen Lichtintensitäten und zum Ausgeben von Schaltsignalen,
**dadurch gekennzeichnet,**
**dass** mindestens eine weitere Lichtquelle (52) vorhanden ist zum Strahlen des weiteren Lichtflecks (61) auf eine von der ersten Stelle verschiedene weitere Stelle des nachzuweisenden Objekts (10),
**dass** die Größen des ersten Lichtflecks (60) und des weiteren Lichtflecks (61) auf dem nachzuweisenden Objekt (10) so gewählt sind, dass von Verschmutzungsteilchen (82), die in der Einsatzumgebung typischerweise auftreten und die von einem der Lichtflecke (60, 61) beleuchtet werden, ein nachweisbarer Anteil des Lichts zurückgestrahlt wird,
**dass** die Detektoreinrichtung (30) eingerichtet ist zum Nachweisen von von dem weiteren Lichtfleck (61) zurückgestrahltem Licht oder dass eine weitere Detektoreinrichtung vorhanden ist zum Nachweisen von von dem weiteren Lichtfleck (61) zurückgestrahltem Licht,
**dass** die Steuer- und Auswerteeinrichtung (70) eingerichtet ist zum Ansteuern der weiteren Lichtquelle (52), und
**dass** die Steuer- und Auswerteeinrichtung (70) eingerichtet ist zum Ausgeben eines Schaltsignals "Objekt erkannt" nur dann, wenn sowohl eine zu dem ersten Lichtfleck (60) gehörende Intensität als auch eine zu dem weiteren Lichtflecken (61) gehörende Intensität über einem jeweils festzulegenden Grenzwert liegt.

8. Lichttaster nach Anspruch 7,
**dadurch gekennzeichnet,**
**dass** genau eine weitere Lichtquelle (52) vorhanden ist.

9. Lichttaster nach Anspruch 7 oder 8,
**dadurch gekennzeichnet,**
**dass** die Lichtquellen (50, 52) Leuchtdioden (51, 53) sind, welche in Chip-on-Board-Technologie auf einer Leiterplatte (40) angeordnet sind.

10. Lichttaster nach einem der Ansprüche 7 bis 9,
**dadurch gekennzeichnet,**
**dass** das Licht der verschiedenen Lichtquellen (50, 52) mit ein und derselben Sendeoptik (18) auf das Objekt (10) geleitet wird.

11. Lichttaster nach einem der Ansprüche 7 bis 10,
**dadurch gekennzeichnet,**
**dass** das von den Lichtflecken (60, 61) zurückgestrahlte Licht mit ein und derselben Detektoreinrichtung (30) nachgewiesen wird.

12. Lichttaster nach einem der Ansprüche 7 bis 11,
**dadurch gekennzeichnet,**
**dass** die Detektoreinrichtung (30) für Triangulationsmessungen ein Nahelement (35) und ein Fernelement (34) aufweist.

13. Lichttaster nach einem der Ansprüche 7 bis 12,
**dadurch gekennzeichnet,**
**dass** die Detektoreinrichtung (30) eine Photodiode (31, 32, 33) ist, die auf der derselben Leiterplatte (40) wie die Leuchtdioden (51, 53) in Chip-On-Board-Technologie angeordnet sind.

14. Lichttaster nach einem der Ansprüche 7 bis 13,
**dadurch gekennzeichnet,**
**dass** die erste Leuchtdiode (51) symmetrisch zu der Detektoreinrichtung (30) angeordnet ist.
